# FASCICULE DE BREVET EUROPEEN

(11) **EP 1 702 509 B1**
(45) Date de publication et mention de la délivrance du brevet: **30.06.2010**
(21) Numéro de dépôt: 06290422.2
(22) Date de dépôt: 15.03.2006
(51) Int. Cl.: A01K 5/00, E02F 3/407, E02F 3/40

(54) **Godet de distribution**
Abgabeschaufel
Supply bucket.

(30) Priorité: 18.03.2005 FR 0502740
(43) Date de publication de la demande: 20.09.2006
(73) Titulaire: Emily S.A.S., 29800 Treflevenez (FR)
(72) Inventeur: Miossec, Arnaud, 29440 Plouzevede (FR)
(74) Mandataire: Maillet, Alain

(56) Documents cités:
- DE-A1- 1 481 470
- US-A- 4 718 537
- US-A- 4 738 350
- US-A- 5 148 615
- US-A- 5 259 692
- US-A- 5 936 185
- PATENT ABSTRACTS OF JAPAN vol. 1999, no. 03, 31 mars 1999 (1999-03-31) -& JP 10 331185 A (JIYAKUTEI ENG KK), 15 décembre 1998 (1998-12-15)
- PATENT ABSTRACTS OF JAPAN vol. 1997, no. 07, 31 juillet 1997 (1997-07-31) -& JP 09 067932 A (KAJIMA DORO KK), 11 mars 1997 (1997-03-11)

## Description

La présente invention concerne, notamment, un godet de distribution permettant la distribution de produit en vrac du type comprenant, d'une part, au moins une ouverture de déchargement et, d'autre part, une vis sans fin disposée dans le fond du godet pour déverser son contenu au travers de ladite ouverture.

Un tel godet de distribution convient en particulier, lorsqu'il est attelé à un tracteur agricole, un chargeur, un engin pourvu d'un bras télescopique, pour transporter et distribuer de la nourriture aux animaux.

Un godet de distribution est généralement constitué d'une benne, ouverte dans sa partie supérieure, et qui incorpore dans son fond une vis sans fin susceptible d'être entraînée à rotation par un moteur. Une ouverture, pourvue d'une trappe de fermeture/dégagement, est réalisée dans au moins l'un des flancs de la benne, de manière à ce que la mise en fonctionnement de la vis sans fin puisse faire sortir au travers de ladite ouverture, le produit en vrac contenu dans la benne dans la position de dégagement de ladite trappe.

Bien qu'un tel godet puisse rendre de grands services, on a constaté qu'en fonction de la nature du produit distribué, il arrive parfois que l'ouverture puisse être obstruée par un volume de produit amalgamé, comprimé par le travail de la vis sans fin. Cette situation intervient en particulier lorsque le produit contenu dans la benne est de l'herbe ensilée particulièrement humide. Le produit est alors remué dans la benne sans qu'il puisse sortir. Quand le produit parvient finalement à sortir, il est évacué par grosses quantités si bien que l'on ne peut doser convenablement la quantité de produit déversée.

Une solution connue pour tenter de palier cet inconvénient consiste à installer dans la benne, un dispositif de défragmentation destiné à défragmenter le produit au voisinage de la vis sans fin pendant la distribution du produit.

De tels dispositifs de défragmentation sont constitués par exemple, d'une seconde vis de démêlage disposée au-dessus de la première et entraînée en sens inverse, d'un disque pourvu à sa périphérie de dents agissant comme un peigne et qui est disposé libre à rotation contre une paroi principale de la benne.

Un autre dispositif est proposé dans le document US 5,148,615 qui décrit un godet selon le préambule de la revendication 1 ainsi qu'une méthode selon le préambule de la revendication 11.

Ces différents dispositifs ne donnent malheureusement pas toujours satisfaction.

Aussi, le but de l'invention est donc de proposer, notamment, un godet de distribution qui puisse distribuer des produits considérés comme difficiles à déverser.

A cet effet, est proposé un godet pour la distribution de produits en vrac, du type comprenant, d'une part, au moins une ouverture de déchargement et, d'autre part, une vis sans fin disposée au niveau d'une paroi de fond du godet pour déverser son contenu au travers de ladite ouverture, ledit godet étant remarquable en ce que la vis sans fin comprend un premier sous-ensemble, un second sous-ensemble coaxiaux, disposés l'un dans le prolongement de l'autre et de manière libre à rotation l'un par rapport à l'autre, le premier sous-ensemble, le second sous-ensemble étant pourvus respectivement de moyens d'entraînement à rotation, le fonctionnement des moyens d'entraînement à rotation étant asservi.

La construction en deux parties de la vis sans fin permet d'obtenir un fonctionnement indépendant de chaque sous-ensemble alors que l'asservissement des moyens d'entraînement à rotation permet d'adapter de manière automatique le fonctionnement des deux sous-ensembles.

On peut, par exemple, ne faire fonctionner qu'un seul sous-ensemble dans certaines conditions de travail du godet.

On peut également faire fonctionner les deux sous-ensembles dans un même sens de rotation pour déverser le contenu du godet d'un bord ou de l'autre de celui-ci ou bien encore faire fonctionner les deux sous-ensembles dans des sens opposés de rotation pour déverser le contenu du godet simultanément vers ses deux bords.

Selon une caractéristique additionnelle de l'invention, les moyens d'entraînement à rotation comprennent un premier moteur hydraulique et un second moteur hydraulique raccordés en série, une vanne pilotée étant raccordée entre, d'une part, un circuit de liaison entre le premier moteur hydraulique et le second moteur hydraulique et, d'autre part, un circuit hydraulique de retour, un pressostat étant raccordé, d'une part, à un circuit hydraulique aller et, d'autre part, à la vanne pilotée pour la commander.

Lorsque la puissance absorbée par la vis sans fin excède une certaine valeur, le pressostat commande l'ouverture de la vanne pilotée qui agit comme une vanne de décharge, si bien que l'un des sous-ensembles est alors débrayé. Cette situation intervient par exemple à l'amorce d'un bourrage du produit au niveau de l'ouverture de déchargement ou d'un remuage inutile du contenu du godet par la vis sans fin.

Lorsque la puissance absorbée descend au-dessous d'un certain seuil, le sous-ensemble arrêté est mis à nouveau en fonctionnement.

Selon une caractéristique additionnelle de l'invention, un second pressostat est raccordé, d'une part, au circuit hydraulique retour et, d'autre part, à la vanne pilotée pour la commander, un premier clapet anti-retour étant raccordé entre le circuit hydraulique aller et la vanne pilotée, un second clapet anti-retour étant raccordé entre le circuit hydraulique retour et la vanne pilotée.

Ce raccordement hydraulique des moteurs permet un déversement d'un bord ou de l'autre du godet de distribution par l'inversion des flux hydrauliques commandée par un distributeur de commande conventionnel.

Selon une caractéristique additionnelle de l'invention, au moins l'un des pressostats est pourvu d'un moyen de réglage de la valeur de son seuil de déclenchement afin d'adapter le fonctionnement du godet à la nature du produit distribué.

Selon une caractéristique additionnelle de l'invention, le godet de distribution comprend un distributeur interposé dans le circuit hydraulique de raccordement d'un moteur hydraulique pour inverser son sens de rotation.

La manoeuvre de ce distributeur permet d'inverser le sens de rotation dudit moteur si bien que l'on obtient un déversement simultané de son contenu d'un bord et de l'autre du godet de distribution.

Selon une caractéristique additionnelle de l'invention, chaque sous-ensemble comprend un élément tubulaire entouré d'un filet hélicoïdal et à l'intérieur duquel est disposé un moyen d'entraînement correspondant.

Selon une caractéristique additionnelle de l'invention, le moyen d'entraînement comprend un support moteur à l'intérieur duquel est monté le moteur hydraulique correspondant, le support moteur étant pourvu d'un flasque fixé sur une paroi latérale du godet de distribution.

Selon une caractéristique additionnelle de l'invention, le pas du filet hélicoïdal de l'élément tubulaire appartenant au premier sous-ensemble est inverse de celui appartenant au second sous-ensemble pour brasser le contenu du godet pendant sa vidange afin de réduire la possibilité de formation d'un amalgame de produit.

Selon une caractéristique additionnelle de l'invention, un moyen de liaison réunit le premier sous-ensemble et le second sous-ensemble.

Selon une caractéristique additionnelle de l'invention, la longueur de l'élément tubulaire du premier sous-ensemble est inférieure à celle du second sous-ensemble pour répartir différemment la charge de travail de chaque sous-ensemble.

Un procédé de déchargement d'un godet de distribution pourvu, d'une part, d'au moins une ouverture de déchargement et, d'autre part, d'une vis sans fin disposée au niveau d'une paroi de fond du godet pour déverser son contenu au travers de ladite ouverture, est également proposé.

Selon le procédé, celui-ci consiste à faire fonctionner de manière asservie des moyens d'entraînement à rotation d'un premier sous-ensemble et d'un second sous-ensemble constitutifs de la vis sans fin.

On peut de la sorte prévoir un asservissement qui adapte automatiquement le fonctionnement du godet de distribution aux conditions de travail auxquelles sont soumis le premier et le second sous-ensemble.

Selon une autre caractéristique du procédé, celui-ci consiste à interrompre le fonctionnement d'un moyen d'entraînement à rotation dès lors que la puissance absorbée par le fonctionnement de la vis sans fin atteint un seuil prédéterminé.

Selon une caractéristique additionnelle du procédé, celui-ci consiste à faire tourner un moyen d'entraînement à rotation en sens inverse de l'autre pour permettre le déversement du contenu du godet de distribution au travers de deux ouvertures de déchargement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un godet de distribution selon l'invention,
la Fig. 2a représente une vue en coupe d'une vis sans fin pour un godet de distribution selon l'invention,
la Fig. 2b représente une vue d'extrémité d'une vis sans fin pour un godet de distribution selon l'invention,
la Fig. 2c représente une vue d'un détail d'une vis sans fin pour un godet de distribution selon l'invention,
la Fig. 3 représente une vue en perspective d'un godet de distribution dont les trappes de fermeture sont placées dans une position de dégagement selon l'invention,
la Fig. 4 représente une vue d'un schéma hydraulique de fonctionnement d'un godet de distribution selon l'invention,
la Fig. 5 représente une vue d'une première variante de réalisation d'un schéma hydraulique de fonctionnement d'un godet de distribution selon l'invention,
la Fig. 6 représente une vue d'une seconde variante de réalisation d'un schéma hydraulique de fonctionnement d'un godet de distribution selon l'invention, et
la Fig. 7 représente un schéma montrant le déclenchement du fonctionnement d'un moteur d'entraînement d'un second sous-ensemble d'une vis sans fin pour un godet de distribution selon l'invention.

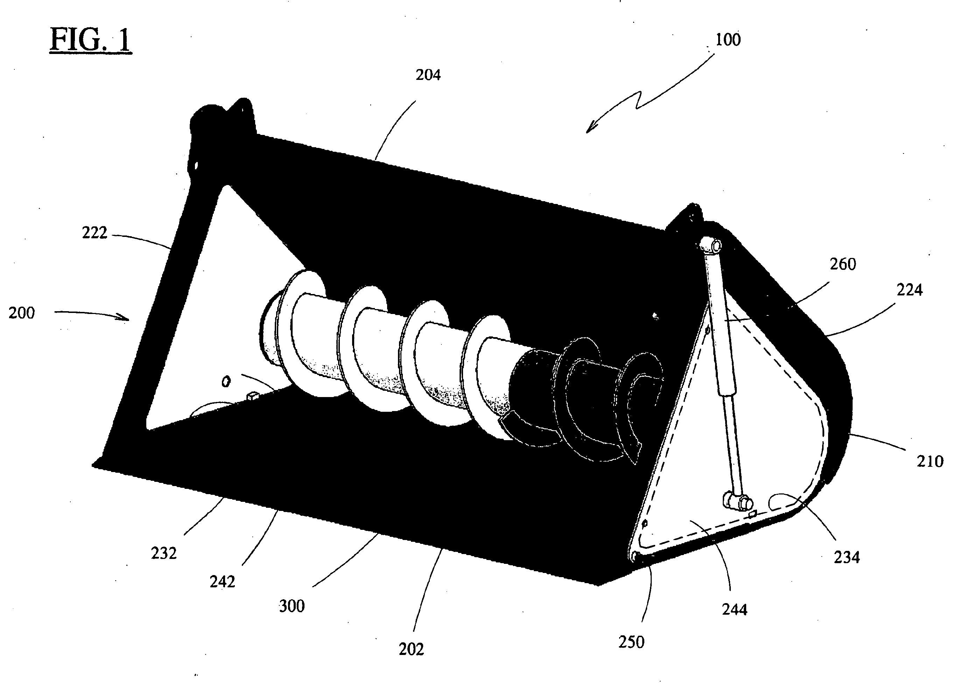

Le godet de distribution 100 représenté à la Fig. 1 comprend essentiellement une benne 200 à l'intérieur de laquelle est montée une vis sans fin 300.

La benne 200 est constituée d'une enveloppe ouverte sur une de ses faces et comprend deux parois principales frontale 202 et dorsale 204 réunies, d'une part, par une paroi de fond 210 et latéralement par deux parois latérales 222, 224.

Au moins une des parois latérales 222 ou 224 est pourvue d'une ouverture de déchargement 232 ou 234. A cette Fig. 1, les deux parois latérales 222 ou 224 sont pourvues respectivement de deux ouvertures de déchargement 232, 234.

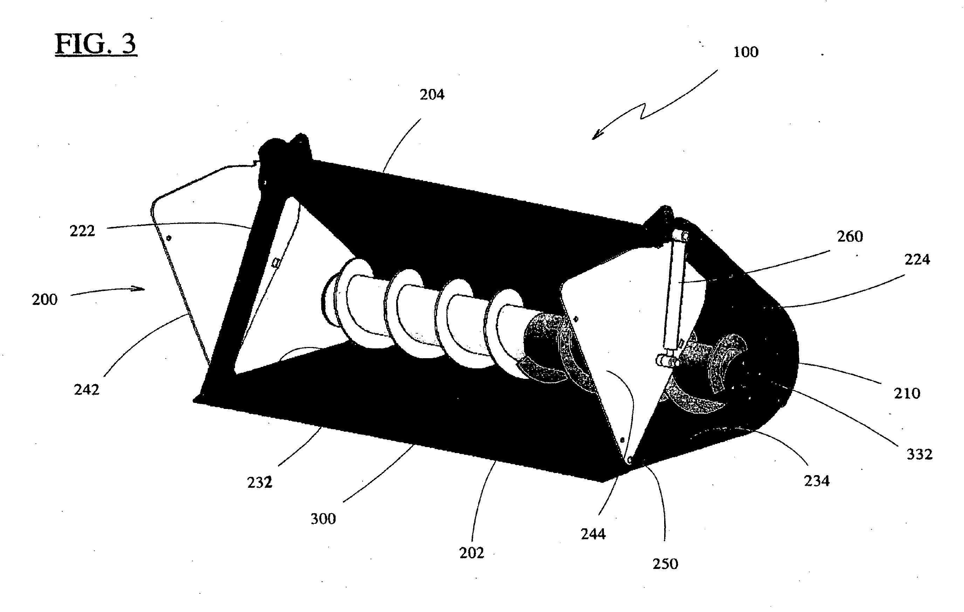

Une trappe de fermeture 242, 244 est disposée à recouvrement sur chaque ouverture de déchargement 232, 234. Cette trappe de fermeture 242, 244 est montée à coulissement, par exemple autour d'une articulation 250, sur la face externe de la paroi latérale 222 ou 224 correspondante, sous l'effet du travail d'un moyen de manoeuvre, tel qu'un vérin hydraulique 260, entre une position de fermeture de l'ouverture correspondante 232, 234, visible à cette Fig. 1, et une position de dégagement visible à la Fig. 3.

A la Fig. 1, des moyens de fixation du godet de distribution 100 à un engin de manoeuvre, tel qu'un tracteur agricole, un chargeur, un engin pourvu d'un bras télescopique, sont prévus sur la paroi principale dorsale 204. Ces moyens de fixation, non représentés, sont constitués par des sous-ensembles fabriqués en mécano soudure et qui sont fixés par vissage sur ladite paroi.

La vis sans fin 300 est disposée longitudinalement dans la benne 200, au niveau de sa paroi de fond 210.

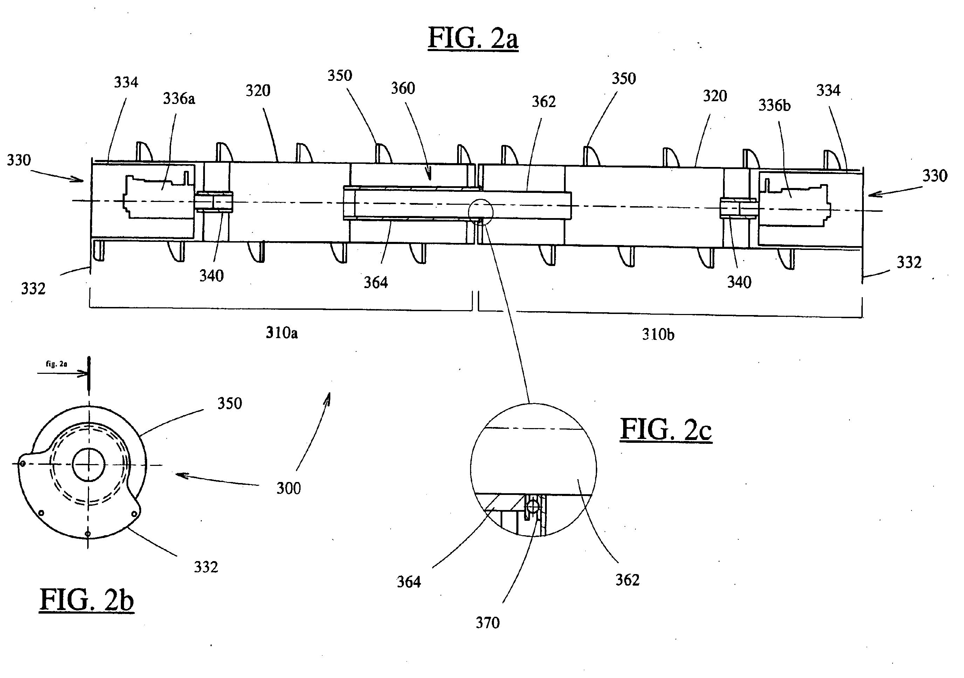

A la Fig. 2a, la vis sans fin 300 est constituée d'un premier sous-ensemble 310a, et d'un second sous-ensemble 310b coaxiaux qui sont disposés l'un dans le prolongement de l'autre.

Chaque sous-ensemble 310 est constitué d'un élément tubulaire 320, à l'intérieur duquel est monté un moyen d'entraînement à rotation 330, et à l'extérieur duquel est disposé un filet hélicoïdal 350 constitué, par exemple, d'une bande métallique conformée et rapportée par soudage.

Pour mettre en oeuvre un brassage du contenu du godet de distribution pendant sa vidange, le pas du filet hélicoïdal 350 du premier sous-ensemble 310a pourrait être inverse à celui du filet hélicoïdal 350 du second sous-ensemble 310b.

L'élément tubulaire 320 est de préférence constitué d'un cylindre de section circulaire. Dans l'extrémité libre de chaque élément tubulaire 320 est logé un moyen d'entraînement 330 à rotation correspondant.

Celui-ci comprend un flasque 332, visible également aux Figs. 2b et 3, destiné à être fixé sur une paroi latérale du godet de distribution et contre lequel est disposé un support moteur 334 et à l'intérieur duquel est monté un moteur d'entraînement à rotation 336a, 336b tel qu'un moteur hydraulique.

Le flasque 332 est constitué d'une couronne bordée localement par un lobe qui constitue une zone d'ancrage du moyen d'entraînement 330 à rotation sur la paroi latérale du godet de distribution, comme cela apparaît à la Fig. 3.

A la Fig. 2a, le support moteur 334 est constitué d'un pot qui prend place à l'intérieur de l'élément tubulaire 320 correspondant et dont le fond est percé d'un trou pour le passage de l'arbre d'entraînement du moteur hydraulique 336a, 336b. Celui-ci est monté de manière à ce que son arbre moteur puisse s'engrener dans une noix 340 qui est fixée, par au moins une entretoise en forme de disque, à l'intérieur de l'élément tubulaire 320 correspondant. Ainsi, le fonctionnement d'un moteur 336a, 336b entraîne à rotation l'élément tubulaire 320 correspondant entouré de son filet hélicoïdal 350.

Un moyen de liaison 360 réunit de manière libre à rotation le premier sous-ensemble 310a, et le second sous-ensemble 310b. Ce moyen de liaison 360 permet de supporter des efforts axiaux et radiaux auxquels sont soumis les deux sous-ensembles 310a et 310b pendant leur fonctionnement.

Ce moyen de liaison 360 est constitué à la Fig. 2a, d'un arbre 362 solidarisé intérieurement à l'élément tubulaire 320 d'un sous-ensemble 310 et qui peut tourillonner dans un palier 364 solidarisé intérieurement à l'élément tubulaire 320 de l'autre sous-ensemble 310. Dans le détail montré à la Fig. 2c, et de manière optionnelle, une butée à bille 370 est interposée entre le palier 364 et une entretoise fixée à l'intérieur d'un élément tubulaire 320.

Cet agencement particulier de la vis sans fin 300 et de ses moyens d'entraînement à rotation permet de faire fonctionner de manière indépendante les deux sous-ensembles 310a, 310b.

Par cette construction de la vis sans fin 300 en deux parties, on peut de la sorte permettre un déversement du contenu de la benne 200 au travers d'une unique ouverture de déchargement dont est pourvue la benne 200 ou au travers de l'une ou l'autre de deux ouvertures de déchargement dont est pourvue la benne 200 en faisant tourner les deux éléments tubulaires 320 dans un même sens de rotation. On peut également mettre en oeuvre un déversement simultané au travers des deux ouvertures de déchargement en faisant tourner les éléments tubulaires 320 dans un sens opposé de rotation.

Cependant c'est surtout dans sa capacité à déverser des produits réputés difficiles à distribuer, comme de l'ensilage d'herbe à forte teneur en eau et/ou contenant de longues fibres, que réside la particularité du godet de distribution de l'invention.

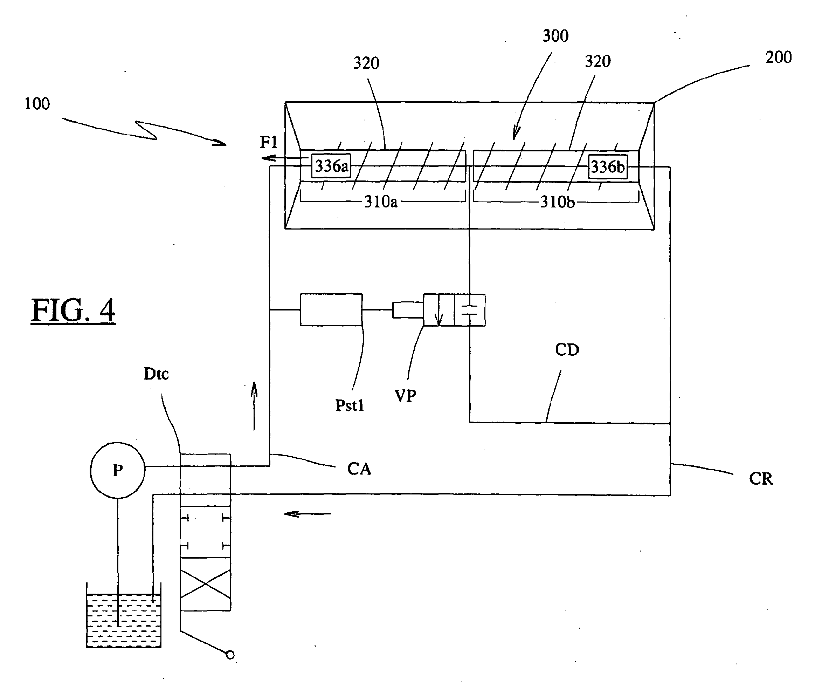

Pour la réalisation du premier type d'opération, c'est-à-dire pour permettre le déversement d'un unique et même côté du godet de distribution 100, le fonctionnement des deux moteurs hydrauliques 336a, 336b est mis en oeuvre suivant le schéma hydraulique représenté à la Fig. 4 et dont les différents constituants sont de préférence montés sur le godet de distribution 100.

Le godet de distribution 100 est ici pourvu d'une seule ouverture de déchargement munie d'une trappe de fermeture, non représentées.

Les deux moteurs hydrauliques 336a et 336b sont raccordés en série à une pompe hydraulique P débitant au travers d'un distributeur de commande Dtc. Un circuit hydraulique de dérivation CD raccorde un circuit de liaison entre les deux moteurs hydrauliques 336a et 336b avec le circuit hydraulique de retour CR. Une vanne pilotée VP est interposée sur ce circuit hydraulique de dérivation CD. Son fonctionnement est commandé par l'intermédiaire d'un pressostat Pst1 branché sur le circuit hydraulique aller CA, c'est-à-dire sur le circuit de sortie de la pompe hydraulique P, et qui peut ainsi mesurer la pression fournie par ladite pompe. Ce pressostat Pst1 est, de préférence, de type à sortie électrique pour atténuer son niveau d'hystérésis et diminuer ainsi le temps de réponse de la vanne pilotée VP. Pour pouvoir être commandée directement par le pressostat Pst1, la vanne pilotée VP est de préférence de type à commande électrique.

En fonctionnement normal, c'est-à-dire lorsque la vidange du contenu de la benne 200 ne présente pas de difficulté particulière, le fonctionnement du godet de distribution 100 s'établit de la manière suivante. Lorsque la pompe hydraulique P débite, les deux moteurs hydrauliques 336a et 336b sont entraînés ensemble. Le contenu du godet de distribution 100 peut ainsi être vidangé au travers de l'ouverture de déchargement, comme le montre la flèche F1 à cette Fig. 4.

Pour permettre la vidange, la trappe de fermeture est positionnée dans sa position de dégagement. Le fonctionnement de cette trappe de fermeture, qui est, de préférence, asservi au fonctionnement des moteurs hydrauliques 336a et 336b, n'est pas décrit ici dans le détail.

Lorsque le contenu de la benne 200 s'avère difficile à vidanger, le fonctionnement du godet de distribution 100 s'établit de la manière suivante. Consécutivement à un bourrage du produit dans l'ouverture ou lors d'un travail de brassage important de la vis sans fin 300 engendré par le fonctionnement des deux moteurs hydrauliques 336a et 336b, la pression hydraulique dans le circuit sortant de la pompe hydraulique P s'élève, pour atteindre une valeur seuil S1 de déclenchement du pressostat Pst1. Le pressostat Pst1 commande alors l'ouverture de la vanne pilotée VP qui agit comme une vanne de délestage, si bien que la pression d'alimentation du second moteur 336b, c'est-à-dire celui appartenant au second sous-ensemble 310b, chute et celui-ci s'arrête alors de fonctionner ce qui a pour effet de réduire la poussée du produit sur l'ouverture de déchargement.

Seul le premier moteur 336a situé près de l'ouverture de déchargement travaille pour entraîner son élément tubulaire 320 correspondant afin de forcer le produit en vrac à être évacué au travers de ladite ouverture.

On remarquera que la longueur de l'élément tubulaire 320 du premier sous-ensemble 310a pourrait être inférieure à celle du second sous-ensemble 310b, afin que cet élément tubulaire puisse travailler principalement pour résorber un bourrage du produit et forcer celui-ci à sortir par l'ouverture de déchargement, l'autre élément tubulaire 320 appartenant au second sous-ensemble 310b servant alors à alimenter l'élément tubulaire 320 du premier sous-ensemble 310a.

Le déversement ayant repris normalement, la pression hydraulique dans le circuit sortant de la pompe hydraulique P diminue alors en dessous de la valeur seuil SI de déclenchement, si bien que le second moteur 336b est remis en fonctionnement par la fermeture de la vanne pilotée VP pour que l'élément tubulaire 320 du second sous-ensemble 310b puisse déplacer le produit en vrac en direction de l'élément tubulaire 320 du premier sous-ensemble 310a.

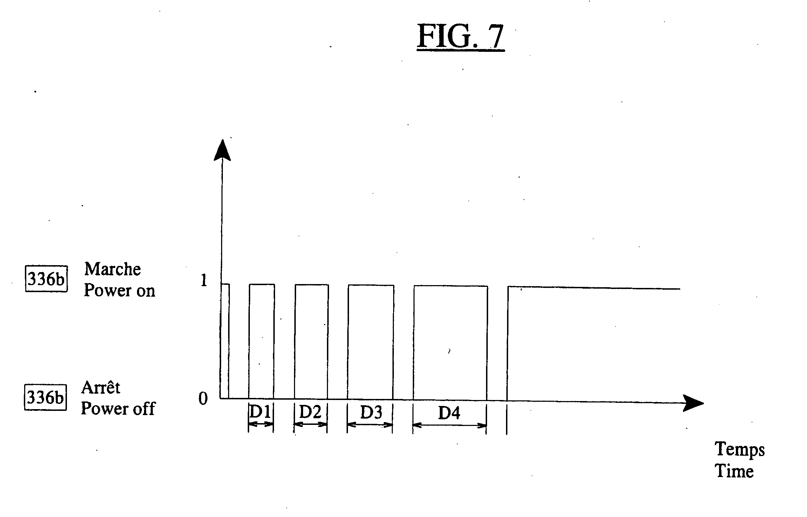

Compte tenu du surcroît de puissance absorbé par le second moteur 336b, lors de sa remise en fonctionnement, celle-ci s'effectue par paliers de durées croissantes. Cette étape de remise en fonctionnement est montrée à la Fig. 7. La durée D1-D4 de chaque période de fonctionnement dudit moteur 336b s'accroît progressivement dans le temps pour devenir ininterrompue, ce qui permet une remise en fonctionnement progressive des sous-ensembles 310a, 310b.

Le pressostat Pst1 peut être pourvu d'un moyen de réglage de la valeur de son seuil de déclenchement SI afin d'adapter le fonctionnement du godet de distribution de produits en vrac à la nature du produit distribué.

Lorsque celui-ci est, par exemple de l'herbe ensilée, récoltée par temps humide, cette herbe ensilée contient une forte proportion d'humidité, ce qui accroît sa difficulté de vidange. Dans ces conditions, la valeur de tarage du pressostat Pst1 est augmentée pour éviter une interruption et une remise en fonctionnement intempestives du second sous-ensemble 310b.

A contrario, lorsque le produit à distribuer est, par exemple un ensilage de maïs, plus facile à vidanger, la valeur du seuil SI de déclenchement est abaissée.

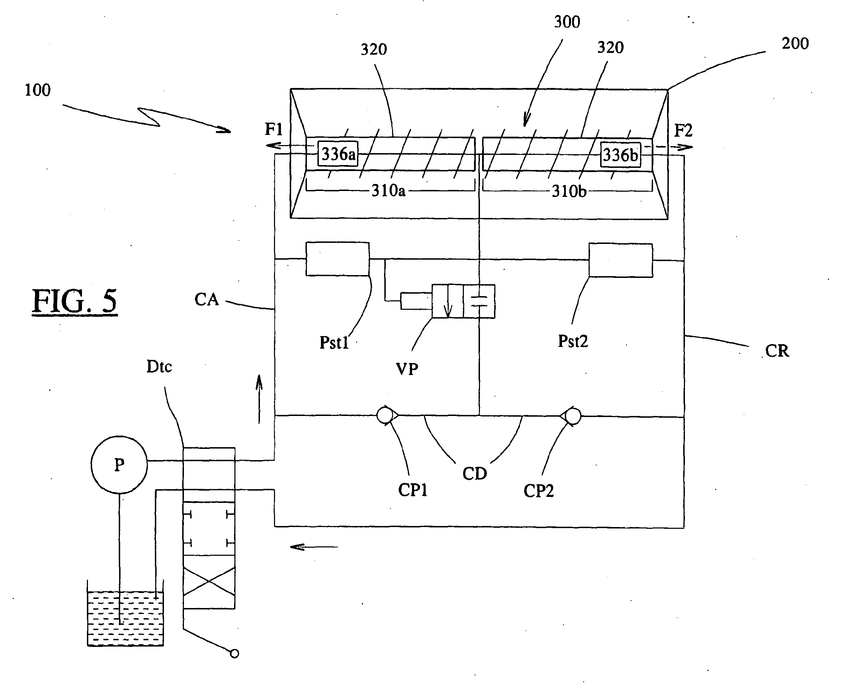

Pour la réalisation du second type d'opération, c'est-à-dire pour permettre le déversement d'un coté ou de l'autre du godet de distribution 100, le fonctionnement des moteurs hydrauliques 336a, 336b est mis en oeuvre suivant le schéma hydraulique de raccordement représenté à la Fig. 5.

Le godet de distribution 100 est ici pourvu de deux ouvertures de déchargement munies respectivement de deux trappes de fermeture, non représentées.

Le circuit hydraulique de dérivation CD est raccordé, en aval de la vanne pilotée VP, respectivement au circuit hydraulique aller CA et au circuit hydraulique de retour CR par l'intermédiaire de deux clapets anti-retour CP1, CP2. On distingue également la présence de deux pressostats Pst1, Pst2 branchés respectivement sur le circuit hydraulique aller CA et sur le circuit hydraulique de retour CR et qui sont raccordés mutuellement à la vanne pilotée VP.

Dans la position du distributeur de commande Dtc représentée à cette Fig. 5, la pompe hydraulique P débite dans le circuit hydraulique aller CA, permettant un fonctionnement des moteurs 336a et 336b pour qu'ils puissent entraîner, dans le même sens de rotation, les éléments tubulaires 320 afin que le contenu de la benne 200 puisse être déchargé au travers d'une ouverture de déchargement suivant la direction indiquée par la flèche F1.

Dans la position du distributeur de commande Dtc permettant l'inversion des flux dans le circuit hydraulique et qui est représentée par des traits croisés, les moteurs hydraulique 336a et 336b sont entraînés en sens inverse ce qui à pour effet de déverser le contenu de la benne 200 par l'autre côté au travers de l'autre ouverture de déchargement suivant la direction indiquée par la flèche F2 dessinée en traits interrompus. On remarquera que dans cette position du distributeur de commande Dtc, les circuits aller et retour sont inversés.

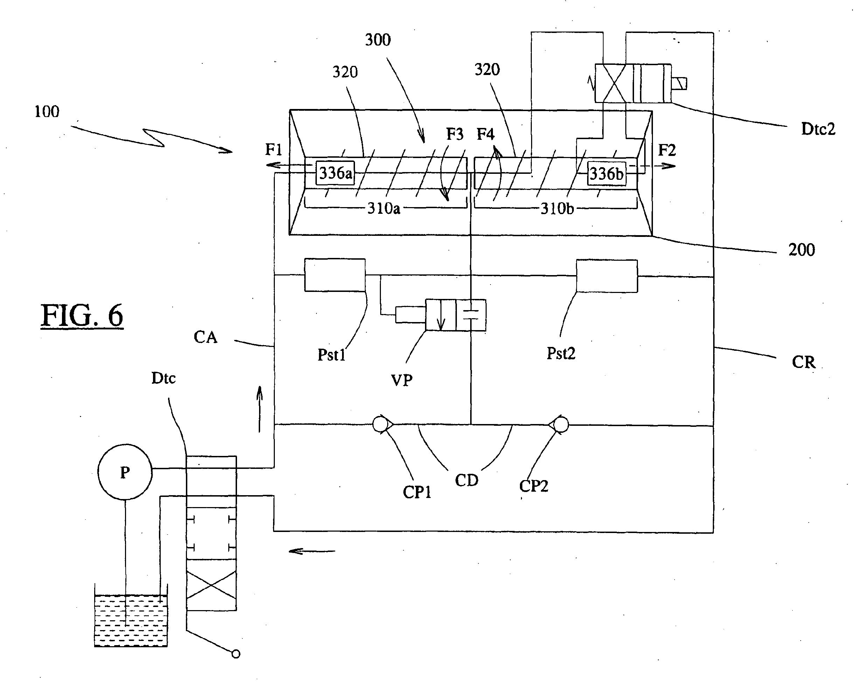

Pour la réalisation du troisième type d'opération, c'est-à-dire pour permettre le déversement simultané d'un coté et de l'autre du godet de distribution 100, le fonctionnement des moteurs hydrauliques 336a, 336b est mis en oeuvre suivant le schéma hydraulique représenté à la Fig. 6 qui est une variante de réalisation du schéma hydraulique de la Fig. 5.

Un second distributeur Dtc2 est ici interposé dans le circuit hydraulique de raccordement du second moteur hydraulique 336b pour inverser son sens de rotation.

On peut ainsi faire fonctionner en sens inverse les deux moteurs hydrauliques 336a, 336b, et par conséquent leurs éléments tubulaires 320 correspondants comme l'indiquent les flèches F3 et F4, de manière à ce que le produit en vrac contenu dans la benne 200 puisse sortir de part et d'autre du godet de distribution 100 au travers de ses deux ouvertures de déchargement.

Le fonctionnement du godet pour la distribution de produits en vrac de l'invention s'adapte automatiquement aux difficultés rencontrées pendant la vidange de son contenu.

Il peut de la sorte distribuer des produits réputés faciles à déverser comme le maïs ensilé ou réputés difficiles à déverser comme l'herbe ensilée.

La puissance consommée est réduite de manière importante par rapport à un godet de distribution de taille identique, connu de l'état de la technique, du fait qu'une partie seulement de la vis sans fin est amenée à travailler dans des conditions difficiles de fonctionnement.

Le godet pour la distribution permet également de doser précisément la quantité de produit distribuée.

## Revendications

1. Godet (100) pour la distribution de produits en vrac, du type comprenant, d'une part, au moins une ouverture de déchargement (232, 234) et, d'autre part, une vis sans fin (300) disposée au niveau d'une paroi de fond (210) du godet (100) pour déverser son contenu au travers de ladite ouverture (232, 234), **caractérisé en ce que** la vis sans fin (300) comprend un premier sous-ensemble (310a), un second sous-ensemble (310b) coaxiaux, disposés l'un dans le prolongement de l'autre et de manière libre à rotation l'un par rapport à l'autre, le premier sous-ensemble (310a), le second sous-ensemble (310b) étant pourvus respectivement de moyens d'entraînement à rotation (336a, 336b), le fonctionnement des moyens d'entraînement à rotation (336a, 336b) étant asservi.

2. Godet (100) selon la revendication 1, **caractérisé en ce que** les moyens d'entraînement à rotation (336a, 336b) comprennent un premier moteur hydraulique (336a) et un second moteur hydraulique (336b) raccordés en série, une vanne pilotée (VP) étant raccordée entre, d'une part, un circuit de liaison entre le premier moteur hydraulique (336a) et le second moteur hydraulique (336b) et, d'autre part, un circuit hydraulique de retour (CR), un pressostat (Pst1) étant raccordé, d'une part, à un circuit hydraulique aller (CA) et, d'autre part, à la vanne pilotée (VP) pour la commander.

3. Godet (100) selon la revendication 2, **caractérisé en ce qu'**un second pressostat (Pst2) est raccordé, d'une part, au circuit hydraulique retour (CR) et, d'autre part, à la vanne pilotée (VP) pour la commander, un premier clapet anti-retour (CP1) étant raccordé entre le circuit hydraulique aller (CA) et la vanne pilotée (VP), un second clapet anti-retour (CP2) étant raccordé entre le circuit hydraulique retour (CR) et la vanne pilotée (VP).

4. Godet (100) selon la revendication 2 ou 3, **caractérisé en ce qu'**au moins l'un des pressostats (Pst1, Pst2) est pourvu d'un moyen de réglage de la valeur de son seuil (S1) de déclenchement afin d'adapter le fonctionnement du godet (100) à la nature du produit distribué.

5. Godet (100) selon la revendication 3 ou 4, **caractérisé en ce qu'**il comprend un distributeur (Dtc2) interposé dans le circuit hydraulique de raccordement d'un moteur hydraulique (336a, 336b) pour inverser son sens de rotation.

6. Godet (100) selon l'une quelconque des revendications précédentes, **caractérisé en ce que** chaque sous-ensemble (310a, 310b) comprend un élément tubulaire (320) entouré d'un filet hélicoïdal (350) et à l'intérieur duquel est disposé un moyen d'entraînement (330) correspondant.

7. Godet (100) selon la revendication 6, **caractérisé en ce que** le moyen d'entraînement (330) comprend un support moteur (334) à l'intérieur duquel est monté le moteur hydraulique (336a, 336b) correspondant, le support moteur (334) étant pourvu d'un flasque (332) fixé sur une paroi latérale (222, 224) du godet (100) de distribution.

8. Godet (100) selon la revendication 7, **caractérisé en ce que** le pas du filet hélicoïdal (350) de l'élément tubulaire (320) appartenant au premier sous-ensemble (310a) est inverse de celui appartenant au second sous-ensemble (310b).

9. Godet (100) selon l'une quelconque des revendications précédentes, **caractérisé en ce qu'**un moyen de liaison (360) réunit le premier sous-ensemble (310a) et le second sous-ensemble (310b).

10. Godet (100) selon la revendication 6 à 9, **caractérisé en ce que** la longueur de l'élément tubulaire (320) du premier sous-ensemble (310a) est inférieure à celle du second sous-ensemble (310b).

11. Procédé de déchargement d'un godet (100) de distribution pourvu, d'une part, d'au moins une ouverture de déchargement (232, 234) et, d'autre part, d'une vis sans fin (300) disposée au niveau d'une paroi de fond (210) du godet (100) pour déverser son contenu au travers de ladite ouverture (232, 234), **caractérisé en ce qu'**il consiste à faire fonctionner de manière asservie des moyens d'entraînement à rotation (336a, 336b) d'un premier sous-ensemble (310a) et d'un second sous-ensemble (310b) constitutifs de la vis sans fin (300).

12. Procédé selon la revendication 11, **caractérisé en ce qu'**il consiste à interrompre le fonctionnement d'un moyen d'entraînement à rotation (336a, 336b) dès lors que la puissance absorbée par le fonctionnement de la vis sans fin (300) atteint un seuil prédéterminé.

13. Procédé selon la revendication 11 ou 12, **caractérisé en ce qu'**il consiste à faire tourner un moyen d'entraînement (336a, 336b) en sens inverse de l'autre pour permettre le déversement du contenu du godet (100) de distribution au travers de deux ouvertures de déchargement (232, 234).

## Claims

1. Bucket (100) for distributing bulk materials, of the type which comprises on the one hand at least one discharge opening (232, 234) and on the other hand an endless screw (300) arranged at the point where a bottom wall (210) of the bucket (100) is situated to expel the contents thereof through the said opening (232, 234), **characterised in that** the endless screw (300) comprises a first sub-assembly (310a) and a second sub-assembly (310b), which sub-assemblies (310a, 310b) are co-axial, of which one is arranged as a continuation of the other and which are arranged to be free to rotate relative to one another, the first sub-assembly (310a) and the second sub-assembly (310b) being provided with respective means (336a, 336b) for driving them in rotation, the operation of the means (336a, 336b) for driving in rotation being slaved.

2. Bucket (100) according to claim 1, **characterised in that** the means (336a, 336b) for driving in rotation comprise a first hydraulic motor (336a) and a second hydraulic motor (336b) which are connected in series, a pilot-controlled valve (VP) being connected between on the one hand a connecting circuit between the first hydraulic motor (336a) and the second hydraulic motor (336b) and on the other hand a hydraulic return circuit (CR), a pressure-sensitive switch (Pst1) being connected on the one hand to a hydraulic flow circuit (CA) and on the other hand to the pilot-controlled valve (VP) to operate it.

3. Bucket (100) according to claim 2, **characterised in that** a second pressure-sensitive switch (Pst2) is connected on the one hand to the hydraulic return circuit (CR) and on the other hand to the pilot-controlled valve (CP) to operate it, a first non-return valve (CP1) being connected between the hydraulic flow circuit (CA) and the pilot-controlled valve (VP) and a second non-return valve (CP2) being connected between the hydraulic return circuit (CR) and the pilot-controlled valve (VP).

4. Bucket (100) according to claim 2 or 3, **characterised in that** at least one of the pressure-sensitive switches (Pst1, Pst2) is provided with a means of setting the level of its actuating threshold (S1) to enable the operation of the bucket (100) to be adjusted to suit the nature of the material being distributed.

5. Bucket (100) according to claim 3 or 4, **characterised in that** it comprises a directional control valve (Dtc2) which is inserted in the hydraulic connecting circuit of one hydraulic motor (336a, 336b), to allow the direction of rotation of the latter to be reversed.

6. Bucket (100) according to any one of the foregoing claims, **characterised in that** each sub-assembly (310a, 310b) comprises a tubular member (320) which is surrounded by a helical flight (350) and within which is arranged a corresponding driving means (330).

7. Bucket (100) according to claim 6, **characterised in that** the driving means (330) comprises a motor support (334) within which the corresponding hydraulic motor (336a, 336b) is mounted, the motor support (334) being provided with a flange (332) which is fixed to a side-wall (222, 224) of the distributing bucket (100).

8. Bucket (100) according to claim 7, **characterised in that** the hand of the helical flight (350) on the tubular member (320) which belongs to the first sub-assembly (310a) is the opposite of that belonging to the second sub-assembly (310b).

9. Bucket (100) according to any one of the foregoing claims, **characterised in that** a means of connection (360) links together the first sub-assembly (310a) and the second sub-assembly (310b).

10. Bucket (100) according to claims 6 to 9, **characterised in that** the length of the tubular member (320) in the first sub-assembly (310a) is less than that in the second sub-assembly (310b).

11. Method of discharging a distributing bucket (100) which is provided on the one hand with at least one discharge opening (232, 234) and on the other hand with an endless screw (300) which is arranged at the point where a bottom wall (210) of the bucket is situated to expel its contents through the said opening (232, 234), **characterised in that** it comprises causing the means (336a, 336b) for driving in rotation a first sub-assembly (310a) and a second sub-assembly (310b) which make up the endless screw (300) to operate in a slaved fashion.

12. Method according to claim 11, **characterised in that** it comprises interrupting the operation of a means (336a, 336b) for driving in rotation as soon as the power drawn by the operation of the endless screw (300) reaches a predetermined threshold.

13. Method according to claim 11 or 12, **characterised in that** it comprises causing one means (336a, 336b) for driving in rotation to turn in the opposite direction from the other to enable the contents of the distributing bucket (100) to be expelled through two discharge openings (232, 234).

## Patentansprüche

1. Schaufel (100) zum Verteilen von losen Produkten, des Typs, der einerseits mindestens eine Entladeöffnung (232, 234) und andererseits eine Förderschnecke (300) aufweist, die auf dem Niveau einer Bodenwand (210) der Schaufel (100) angeordnet ist, um ihren Inhalt durch die Öffnung (232, 234) zu schütten, **dadurch gekennzeichnet, dass** die Förderschnecke (300) eine erste Unterbaugruppe (310a) aufweist, eine zweite Unterbaugruppe (310b), die koaxial sind, die eine in der Verlängerung der anderen angeordnet sind und frei zueinander drehen, wobei die erste Unterbaugruppe (310a), die zweite Unterbaugruppe (310b) jeweils mit Mitteln zum Antreiben in Drehung (336a, 336b) versehen sind, wobei das Funktionieren der Mittel zum Antreiben in Drehung (336a, 336b) gesteuert ist.

2. Schaufel (100) nach Anspruch 1, **dadurch gekennzeichnet, dass** die Mittel zum Antreiben in Drehung (336a, 336b) einen ersten Hydraulikmotor (336a) und einen zweiten Hydraulikmotor (336b), die in Serie geschaltet sind, aufweisen, wobei ein gesteuertes Ventil (VP) einerseits zwischen einem Verbindungskreislauf zwischen dem ersten Hydraulikmotor (336a) und dem zweiten Hydraulikmotor (336b) und andererseits einem Rücklaufhydraulikkreislauf (CR) angeschlossen ist, wobei ein Druckregler (Pst1) einerseits an einen Hinlaufhydraulikkreislauf (CA) und andererseits an das gesteuerte Ventil (VP) angeschlossen ist, um es zu steuern.

3. Schaufel (100) nach Anspruch 2, **dadurch gekennzeichnet, dass** ein zweiter Druckregler (Pst2) einerseits an den Rücklaufhydraulikkreislauf (CR) und andererseits an das gesteuerte Ventil (VP) angeschlossen ist, um es zu steuern, wobei ein erstes Rückschlagventil (CP1) zwischen dem Hinlaufhydraulikkreislauf (CA) und dem gesteuerten Ventil (VP) angeschlossen ist, wobei ein zweites Rückschlagventil (CP2) zwischen dem Rücklaufhydraulikkreislauf (CR) und dem gesteuerten Ventil (VP) angeschlossen ist.

4. Schaufel (100) nach Anspruch 2 oder 3, **dadurch gekennzeichnet, das** mindestens einer der Druckregler (Pst1, Pst2) mit einem Mittel zum Einstellen des Werts seines Auslöseschwellenwerts (S1) versehen ist, um das Funktionieren der Schaufel (100) an die Beschaffenheit des verteilten Produkts anzupassen.

5. Schaufel (100) nach Anspruch 3 oder 4, **dadurch gekennzeichnet, dass** sie einen Verteiler (Dtc2) aufweist, der in den Anschlusshydraulikkreislauf eines Hydraulikmotors (336a, 336b) eingefügt ist, um seine Drehrichtung umzukehren.

6. Schaufel (100) nach einem der vorhergehenden Ansprüche, **dadurch gekennzeichnet, dass** jede Unterbaugruppe (310a, 310b) ein röhrenförmiges Element (320) aufweist, das mit einem Gewindegang (350) umgeben ist und in dessen Innerem ein entsprechendes Antriebsmittel (330) angeordnet ist.

7. Schaufel (100) nach Anspruch 6, **dadurch gekennzeichnet, dass** das Antriebsmittel (330) einen Motorträger (334) aufweist, in dessen Innerem der entsprechende Hydraulikmotor (336a, 336b) montiert ist, wobei der Motor (334) mit einem Flansch (332) versehen ist, der an einer Seitenwand (222, 224) der Abgabeschaufel (100) befestigt ist.

8. Schaufel (100) nach Anspruch 7, **dadurch gekennzeichnet, dass** die Steigung des Gewindegangs (350) des röhrenförmigen Elements (320), das zu der ersten Unterbaugruppe (310a) gehört, im Vergleich zu der umgekehrt ist, die zu der zweiten Unterbaugruppe (310b) gehört.

9. Schaufel (100) nach einem der vorhergehenden Ansprüche, **dadurch gekennzeichnet, dass** ein Verbindungsmittel (360) die erste Unterbaugruppe (310a) und die zweite Unterbaugruppe (310b) vereint.

10. Schaufel (100) nach Anspruch 6 bis 9, **dadurch gekennzeichnet, dass** die Länge des röhrenförmigen Elements (320) der ersten Unterbaugruppe (310a) kleiner ist als die der zweiten Unterbaugruppe (310b).

11. Verfahren zum Entladen einer Abgabeschaufel (100), die einerseits mit mindestens einer Entladeöffnung (232, 234) und andererseits mit einer Förderschnecke (300) versehen ist, die auf dem Niveau einer Bodenwand (210) der Schaufel (100) angeordnet ist, um ihren Inhalt durch die Öffnung (232, 234) zu schütten, **dadurch gekennzeichnet, dass** es darin besteht, Mittel zum Antreiben in Drehung (336a, 336b) einer ersten Unterbaugruppe (310a) und einer zweiten Unterbaugruppe (310b), die die Förderschnecke (300) bilden, gesteuert funktionieren zu lassen.

12. Verfahren nach Anspruch 11, **dadurch gekennzeichnet, dass** es darin besteht, den Betrieb eines Mittel zum Antreiben in Drehung (336a, 336b) zu unterbrechen, sobald die von dem Betrieb der Förderschnecke (300) aufgenommene Leistung einen vorbestimmten Schwellenwert erreicht.

13. Verfahren nach Anspruch 11 oder 12, **dadurch gekennzeichnet, dass** es darin besteht, ein Antriebsmittel (336a, 336b) in umgekehrte Richtung zum anderen drehen zu lassen, um das Schütten des Inhalts der Abgabeschaufel (100) durch zwei Entladeöffnungen (232, 234) zu erlauben.
